# EUROPÄISCHE PATENTSCHRIFT

(11) **EP 1 519 901 B1**
(45) Veröffentlichungstag und Bekanntmachung des Hinweises auf die Patenterteilung: **07.11.2018**
(21) Anmeldenummer: 03762548.0
(22) Anmeldetag: 30.06.2003
(51) Int. Cl.: C02F 11/16

(54) **VERFAHREN ZUR SCHLAMMFÜHRUNG AUS EINER SCHMUTZWASSERBEHANDLUNGSANLAGE IN EINEN ENTWÄSSERUNGS- UND KOMPOSTIERBEHÄLTER UND ENTSPRECHENDE SCHMUTZWASSERBEHANDLUNGSANLAGE**
METHOD FOR THE TRANSPORT OF SLUDGE FROM A SEWAGE WATER TREATMENT INSTALLATION TO A DRAINAGE AND COMPOSTING CONTAINER AND CORRESPONDING WATER TREATMENT INSTALLATION
PROCÉDÉ D'ACHEMINEMENT DE BOUES PROVENANT D'UNE INSTALLATION DE TRAITEMENT DES EAUX USEES DANS UN RESERVOIR DE DESHYDRATATION ET DE COMPOSTAGE ET INSTALLATION CORRESPONDANTE

(30) Priorität: 04.07.2002 DE 10230671
(43) Veröffentlichungstag der Anmeldung: 06.04.2005
(73) Patentinhaber: MUTEC-Markgraf GmbH, 38459 Bahrdorf (DE)
(72) Erfinder: MARKGRAF, Carsten, 38459 Mackendorf (DE)
(74) Vertreter: Gulde & Partner
(86) Internationale Anmeldenummer: PCT/EP2003/006899
(87) Internationale Veröffentlichungsnummer: WO 2004/005201

(56) Entgegenhaltungen:
- EP-A- 0 409 367
- EP-A- 0 683 144
- EP-A1- 0 946 241
- DE-U- 29 707 646
- FR-A- 1 582 665

## Beschreibung

Die Erfindung betrifft ein Verfahren und eine Schmutzwasserbehandlungsanlage zur Schlammführung in einen Entwässerungs- und Kompostierbehälter, wobei Schlamm und/oder Dickstoffe unterschiedlicher Quelle dem Bodenbereich eines Entwässerungs- und Kompostierbehälters zugeführt werden, so dass das Restwasser nach unten durchsickert, während der obere Bereich der Feststoffe zunehmend durchtrocknet und kompostiert wird.
Der grosse Vorteil dieses Verfahrens der direkten Entwässerung besteht darin, dass keine Faulprozesse entstehen, wodurch die Geruchsentwicklung minimiert wird, dass keine Korrosion stattfindet und kein Schwefelwasserstoff anfällt. Die Erfindung stellt eine deutliche Verbesserung gegenüber herkömmlichen Verfahren der Zuführung von Schlamm in Dickstoffabscheider dar sowie eine Verbesserung der bisherigen Vorrichtungen.
Anwendungsgebiet ist die dezentrale Schmutzwasseraufbereitung mit gleichzeitiger Verwertung und Entsorgung von Schlamm und/oder Dickstoffen vor Ort im Rahmen der Kreislaufwirtschaft.

Bekannt ist eine Vorrichtung und ein Verfahren zur Abwasserreinigung nach EP 0409367, bei der das Schmutzwasser einem unteren Behälterabschnitt (Absetzbereich) zugeführt wird, in dem sich Schlamm und/oder Dickstoffe aus dem Schmutzwasser, in dem sie suspendiert sind, absetzen. Der Schlamm und/oder die abgesetzten Dickstoffe werden in Zeitintervallen über eine senkrechte Zuleitung in den Bodenbereich des oberen Behälterabschnittes gepumpt, wobei die Zuführung durch den Boden des oberen Abschnittes geführt wird. Der obere Behälterabschnitt dient als Entwässerungs- und Kompostierbehälter zur Trocknung und Zersetzung des von unten zugeführten Schlammes und/oder der Dickstoffe, während das Entwässerungswasser zurück in den Absetzbereich tropft.
Das Wasser wird zur weiteren Behandlung (Abbau der gelösten Stoffe) durch ein handelsübliches Ablaufrohr abgeführt. Auf dem oberen Behälterabschnitt sitzt ein Biofilter zu Be- und Entlüftung, der mit Naturstoffen mit speziellem bakteriellem Aufwuchs (Biofilm) ausgestattet ist, wodurch geruchsbildende Stoffe der entweichenden Abluft abgebaut bzw. zurückgehalten werden.
Die Vorrichtung wird vorzugsweise unterirdisch angelegt, so dass nur der Deckel und der Biofilter sichtbar bleiben, so dass die gesamte Anlage beispielsweise im Garten optisch nicht stört und die benötigte Grundfläche noch anderweitig nutzbar bleibt.
Dieser Stand der Technik ist als MUTEC-System bekannt.

Ferner sind Komposthaufen bekannt, die ohne untere Trennschicht auf dem Mutterboden aufgeschichtet werden sowie Kompostbehälter, die das zu kompostierende Gut komplett nach unten und/oder nach weiteren Seiten abdichten und/oder von der Umgebung abtrennen.

Die EP 0 946 241 B1 beschreibt eine Anlage zur Abwasserreinigung, bei welcher der Schlamm- und/oder die Dickstoffe einem Entwässerungs- und Kompostierbehälter mittels einer Zuführungsleitung durch den Behälterboden von unten hindurch zugeführt wird.

Nachteilig beim Stand der Technik sind
▪ die Zuführung des Schlammes und/oder der Dickstoffe durch den Boden des oberen Behälters, was hohen Material- und Arbeitsaufwand zur Abdichtung zur Folge hat,
▪ der Bedarf einer Rückschlagklappe oder eines sonstigen Rückflussverhinderers am Austritt der Schlammzuführung, wodurch regelmässig technische Störungen hervorgerufen werden,
▪ das begrenzte Nutzvolumen der gesamten Vorrichtung, da ab einer gewissen Größe sehr aufwändige Aushubarbeiten des Erdreiches am Einsatzort nötig sind; oft behindert hartes Gestein in größeren Tiefen den Aushub und/oder man trifft bereits auf Grundwasserleiter, die zu einem ungewollten und technisch problematischen Auftrieb der teilweise Luft-gefüllten Vorrichtung führt,
▪ der hohe bauliche und technische Aufwand auch dort, wo nur Bedarf für eine kleinere Lösung für geringere Wassermengen besteht, beispielsweise für eine Ferienwohnung für zwei Personen,
▪ die Austrocknung des Biofilters, der an der Oberfläche Wind, Sonneneinstrahlung, Temperaturschwankungen und sonstigen Witterungseinflüssen ausgesetzt ist, die einen häufigen Austausch des biologisch aktiven Materials notwendig machen; da die Ausreifung eines neuen Biofilms bis zur vollen Aktivität bis zu zwei Wochen dauert, bringt der Austausch jeweils erhebliche Funktionsverluste mit sich,
▪ der unregulierte Abfluss des Wassers zur weiteren Behandlung
▪ der Verbleib von Schwermetallen und anderen unerwünschten nicht biologisch abbaubaren Verunreinigungen im kompostierten Schlamm und/oder in den kompostierten Dickstoffen, die dessen/deren Nutzung im Garten oder in der Landwirtschaft einschränken,
▪ der Verbleib relativ hoher Anteile gelöster und suspendierter Stoffe, insbesondere Phosphate, im abgeführten Wasser,
▪ die bisher fehlende Möglichkeit, zusätzlich oder ausschliesslich Schlamm und/oder Dickstoffe aus externen Quellen im MUTEC-System zu kompostieren,
▪ die bisher fehlende Möglichkeit, vorhandene Dreikammergruben für das System zu nutzen.
▪ die bei der Kompostierung nach dem Stand der Technik fehlende Möglichkeit, den Durchtritt von Restwasser und/oder Niederschlagswasser in tiefer gelegene Bodenschichten zu verhindern und/oder die damit verbundene chemische und/oder mikrobiologische Verunreinigung des Grundwassers zu verhindern, gleichzeitig aber eine Zutrittsmöglichkeit für Boden-Lebewesen aus der Umgebung in das zu kompostierende Gut hinein zu ermöglichen.

Der Erfindung liegt daher die Aufgabe zugrunde, ein Verfahren und eine Schmutzwasserbehandlungsanlage zu schaffen, mit welchen die oben genannten Nachteile am Stand der Technik behoben werden.

Diese Aufgabe wird erfindungsgemäß gelöst durch die Merkmale in den Ansprüchen 1 und 7. Zweckmäßige Ausgestaltungen der Erfindung sind in den Unteransprüchen enthalten.

Die Erfindung soll nachstehend anhand von zumindest teilweise in den Fig. dargestellten Ausführungsbeispielen näher erläutert werden.

Es zeigen:
- Fig. 4: Variante mit zusätzlich externer Schlammzuführung
- Fig. 5: Kompaktversion übereinander
- Fig. 6: Anordnung in Dreikammergrube, Längsschnitt
- Fig. 6a: Anordnung in Dreikammergrube, Querschnitt
- Fig. 7: Anordnung nebeneinander für höheres Nutzvolumen
- Fig. 8: Anordnung nebeneinander versetzt mit Eigengefälle
- Fig. 9: Kombinationsmöglichkeiten mit Fremdschlamm-Quellen
- Fig. 10: Drosselscheibe Typ T in Aufsicht
- Fig. 11: Drosselscheibe Typ V in Aufsicht
- Fig. 12: Schema einer Anordnung mit Schlamm-Vorbehandlung
- Fig. 13: Schema einer Kompostwanne unter einer Kompostier-Einheit im Vertikalschnitt
- Fig. 14: Entwässerungs- und Kompostierbehälter im Vertikalschnitt mit weiteren vorteilhaften Merkmalen

Stand der Technik ist das MUTEC-System. Zwei Behälterabschnitte werden übereinander angeordnet, wobei Schmutzwasser über den Zulauf in den unteren Absetzbereich geleitet wird. Feste Schmutzstoffe setzen sich ab und werden von einer Pumpe für Schlamm und/oder Dickstoffe in den oberen Behälterabschnitt gefördert, in dem der Schlamm und/oder die Dickstoffe entwässert und kompostiert werden. Das anfallende Restwasser sickert über Sieböffnungen im Boden- und/oder Wandbereich des oberen Behälterabschnittes zurück in den unteren Behälterabschnitt (Absetzbereich). Entscheidend ist, dass der nasse Schlamm und/oder die frischen feuchten Dickstoffe nicht von oben aufgebracht werden, sondern das der Kompostierbehälter von unten beschickt wird, während darüberliegende Schlammschichten zunehmend kompostiert werden und ungestört trocknen.
Der Schlamm und/oder die Dickstoffe werden axial senkrecht nach oben in den oberen Behälterabschnitt gefördert. Eine Rückschlagklappe verhindert den Rückfluss bei ausgeschalteter Pumpe. Nach dem Stand der Technik führt die Dickstoff-Leitung über eine Steckverbindung durch den Boden des oberen Behälterabschnittes, was einen hohen Material- und Arbeitsaufwand zur Abdichtung zur Folge hat.
Beim erfindungsgemäßen Verfahren und der erfindungsgemäßen Vorrichtung werden diese Nachteile umgangen, indem der Schlamm und/oder die Dickstoffe nicht durch den Boden des Entwässerungs- und Kompostierbehälters geführt werden.

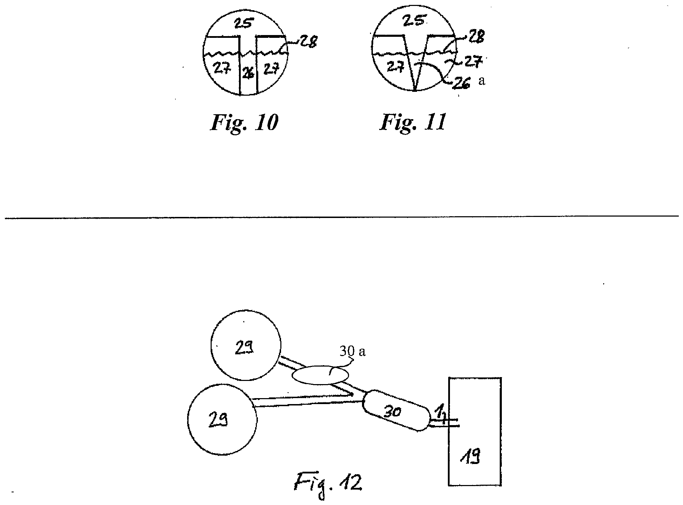

Eine Zuführungsvariante ist, in der der Schlamm und/oder die Dickstoffe von der Seite horizontal in den Bodenbereich des Entwässerungs- und Kompostierbehälters eingebracht werden. Hierbei ist eine lösbare Verbindung der Dickstoff-Leitung. Eine weitere vorteilhafte Ausgestaltung des MUTEC-Systems ist mit Filter und Drosselscheibe. Ein Filter verhindert, dass Schwimm- und Schwebstoffe durch den Ablauf in die weitere Wasserbehandlung gelangen. Eine Drosselscheibe, die den Querschnitt des Ablaufrohres gemäß **Fig. 10 oder 11** ausfüllt, reguliert den Wasserabfluss.
Zur Verbesserung der Übersicht wurden die Objekte 23 und 24 in den folgenden Figuren weggelassen.
Eine Zuführungsvariante ist über den oberen Rand des Kompostierbehälters. Bei diesem erfindungsgemäßen Verlauf der Zuleitung entfällt die Arbeits- und Dichtmaterialaufwändige Durchbrechung der Wand des Entwässerungs- und Kompostierbehälters. Hierbei gibt es eine lösbare Verbindung der Dickstoff-Leitung und eine Be- oder Entlüftungsbohrung oder einen Belüfter, um einen Rücksaug-Effekt zu verhindern, während die Pumpe nicht arbeitet. Durch diese Be- oder Entlüftungsbohrung, die durch einen Belüfter ersetzt sein kann, erübrigt sich eine Rückschlagklappe oder ein sonstiger Rückfluß-Verhinderer, der oft technische Störungen verursacht.

Eine vorteilhafte Ausgestaltung des MUTEC-Systems ist für kleinere Schmutzwassermengen, beispielsweise für einen 2-Personen-Haushalt. Hierbei wird das Schmutzwasser nicht in einen separaten Absetzbereich eingeleitet, sondern direkt in den Bodenbereich des Entwässerungs- und Kompostierbehälters. Das abtropfende Wasser sammelt sich im Auffangbereich und gelangt von dort in den Ablauf, während der Schlamm und/oder die Dickstoffe sich direkt im Entwässerungs- und Kompostierbehälter absetzen; somit entfällt sowohl ein eigener Absetzbereich, als auch eine Pumpe, um abgesetzten Schlamm und/oder Dickstoffe in den Entwässerungs- und Kompostierbehälter zu befördern. Ein T-Stück im Winkel des Zuleitungsrohres ermöglicht Sichtkontrolle und Wartungsarbeiten des Rohres
Nicht erfindungsgemäß sind Varianten der Zuführung der Schlamm und/oder Dickstoffe von unten gegen den Prallteller

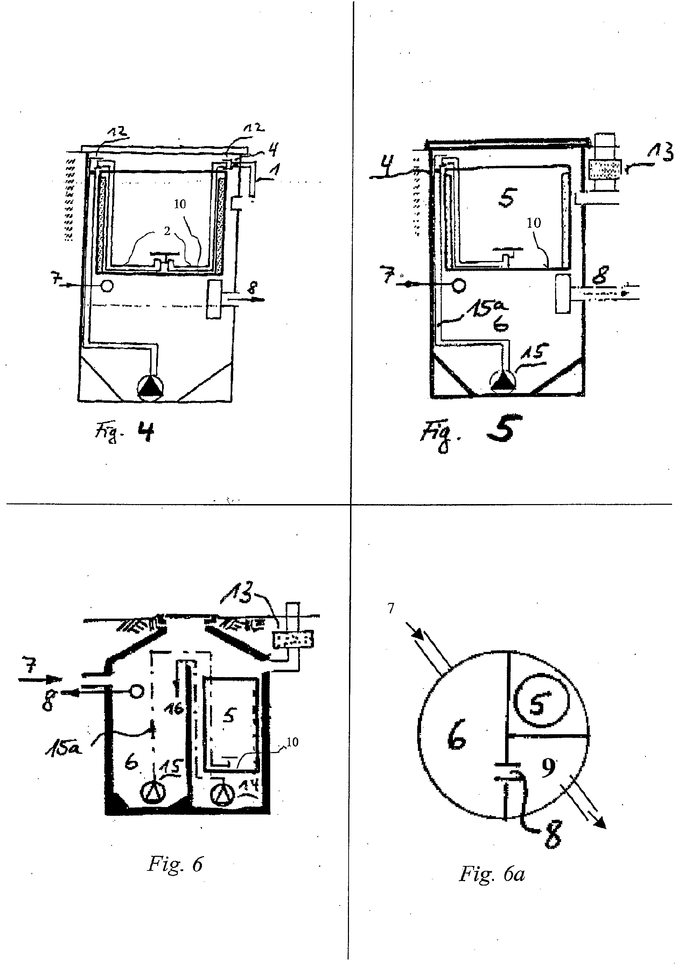

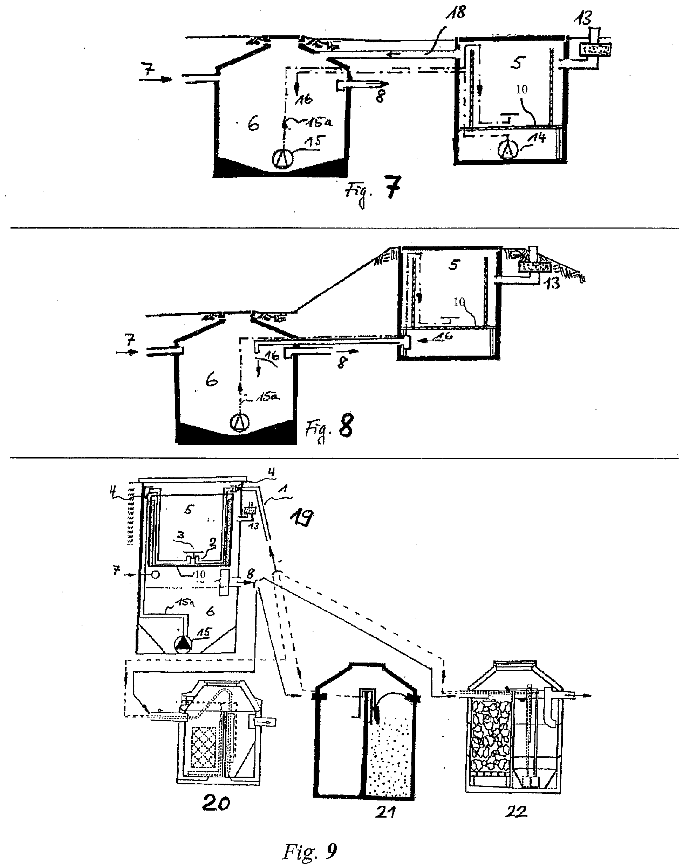

**Fig. 4** zeigt eine Ausgestaltung für die zusätzliche Zuführung externer Schlämme über eine Zuführungsleitung **1**, die mit Hilfe eines Duo-Verteilers **2** gemeinsam im Entwässerungs- und Kompostierbehälter entwässert und kompostiert werden. Dies hat den großen Vorteil, dass auch Schlämme aus anderen Schmutzwasserbehandlungs-Verfahren nach dem MUTEC-System kompostiert und im Rahmen der Kreislaufwirtschaft vor Ort ökologisch verwertet werden können. Eine schematische Anordnung hierzu zeigt Fig. 9. Statt mehrerer Zuführungsleitungen 1 kann auch eine Zuführungsleitung gleichzeitig oder nacheinander aus verschiedenen Quellen beschickt werden.

**Fig. 5 bis 8** zeigen verschiedene Anordnungen des hier beschriebenen Verfahrens und der hier beschriebenen Schmutzwasserbehandlungsanlage, die für unterschiedliche örtliche Rahmenbedingungen vorteilhaft sind. Bei allen Varianten wird der Biofilter **13** nicht mehr wie beim Stand der Technik oberirdisch auf das MUTEC-System aufgesetzt, sondern in das Erdreich eingegraben angeordnet. Dies bietet den entscheidenden Vorteil, dass die Naturmaterialien und die lebenden Mikroorganismen des Biofilters nicht mehr den Temperaturschwankungen, Austrocknung und sonstigen Witterungseinflüssen ausgesetzt sind. Somit erhöht sich die Standzeit des Biofilters deutlich gegenüber der herkömmlichen Anwendung. Ausserdem verbessert sich die Reinigungsleistung, da jeder Austausch des biologischen Materials im Biofilter mit einer leistungsschwächeren Anpassungs- und Aufbauphase des Biofilms (2 bis 3 Wochen) verbunden ist. Mit der Verlängerung der Standzeit einer Füllung entfallen diese weniger effizienten Übergangsphasen.

**Fig. 5** zeigt die Kompaktversion, in der der Entwässerungs- und Kompostierbehälter **5** über dem Absetzbereich **6** angeordnet ist. Diese Ausgestaltung empfiehlt sich, wenn sowieso eine neue Baugrube für das System ausgehoben werden muss.

**Fig. 6** zeigt einen Vertikalschnitt durch eine Anordnung, in der eine vorhandene Dreikammergrube den Behälter des Systems bildet. Hierbei befindet sich der Entwässerungs- und Kompostierbehälter **5** in einem Einsatz neben statt über dem Absetzbereich **6**. Eine Pumpe **14** fördert das abgetropfte Sickerwasser durch die Rückleitung **16** zurück in den Absetzbereich.

**Fig. 6a** zeigt eine Aufsicht auf den Querschnitt einer handelsüblichen Dreikammergrube, in der die Hälfte **6** als Absetzbereich und das Viertel **9** zur weiteren Behandlung des Wassers genutzt werden. Vom Absetzbereich **6** in den Bereich für die weitere Wasserbehandlung **9** führt ein Ablauf **8**. Im verbleibende Viertel befindet sich ein Einsatz für den Entwässerungs- und Kompostierbehälter **5**.

**Fig. 7** zeigt eine Vorrichtung für ein deutlich größeres Nutzvolumen. Die Bautiefe für die beschriebenen Vorrichtungen ist in der Regel auf drei Meter begrenzt, da der hohe Luftanteil im System (durchschnittlich 70%) einen zu großen Auftrieb verursacht, wenn die Baugrube bis in das Grundwasser erreicht. Eine beliebige Erhöhung des Durchmessers des Absetzbereiches **6** wird durch die Pumpleistung begrenzt und führt in der Regel auch zu weiterem Aufwand, um die Funktion zu gewährleisten. Die Lösung dieser Probleme erfolgt erfindungsgemäß dadurch, dass das Nutzvolumen durch zwei nebeneinander angeordnete Behälter erhöht wird, zusätzlich kann der Luftanteil pro Behälter durch diese Anordnung auf 30% reduziert werden. Der Zulauf **7** erfolgt in den Absetzbereich **6**, die abgesetzten Schlamm- und oder Dickstoffe werden von einer Pumpe **15** über die Dickstoff-Leitung **15a** in den Entwässerungs- und Kompostierbehälter **5** gepumpt, der auf gleicher Höhe neben dem Behälter mit dem Absetzbereich **6** angeordnet ist. Eine Pumpe **14** im Bodenbereich des Entwässerungs- und Kompostierbehälters **5** dient der Rückleitung des Sickerwassers **16** in den Absetzbereich **6**. Im Entwässerungs- und Kompostierbehälter ist der Ablauf zur weiteren Wasser-Behandlung **8** angeordnet. Auch in dieser Vorrichtung ist der Biofilter zur Be- und Entlüftung **13** witterungsgeschützt, vorzugsweise unterirdisch angeordnet, nur dessen obere Öffnung ragt aus der Erde. Zusätzlich verbindet eine Luft-Zirkulationsleitung **18** die beiden Behälter. Ein Besonderer Vorteil dieser Luft-Zirkulationsleitung ist, dass dadurch das Luftvolumen der Hausleitung genutzt und die Thermik zum Luftaustausch optimiert wird. Ersatzweise oder zusätzlich ist auch eine Zwangslüftung in Form eines Gebläses möglich.

**Fig. 8** zeigt eine vorteilhafte Ausgestaltung der in **Fig. 7** beschriebenen Vorrichtung, in der der Entwässerungs- und Komposterierbehälter **5** versetzt oberhalb des Absetzbehälters **6** angeordnet ist, beispielsweise im Falle besonders aufwändiger Gruben-Aushubarbeiten, harter Gesteinsschichten, hoher Grundwasserleiter oder vorhandener Hanglage. Die Rückleitung des Sickerwassers **16** erfolgt ohne Pumpe im Eigengefälle. Entgegengesetzt zur Fliessrichtung des Rückwassers strömt gleichzeitig Luft, so dass diese Variante auch den Vorteil einer intensiveren Belüftung bietet.

**Fig. 9** zeigt schematisch die Kombinationsmöglichkeiten der bisher beschriebenen Erfindung mit Fremdschlamm-Quellen. Unter Nutzung der in **Fig. 4** beschriebenen Duo-Verteilung **2** können dem Entwässerungs- und Kompostierbehälter **5** und oder dem kompletten MUTEC-System **19** beliebig Schlamm und/oder Dickstoffe aus anderen Quellen zugeführt werden, beispielsweise abgelöster Biofilm aus einem Festbettreaktor **20** und/oder Schlamm aus einem SBR- (*sequencing batch*) Reaktor **21** und/oder Rückspülschlamm aus einem Tropfkörper **22**.
**Fig. 10** zeigt eine Drosselscheibe Typ T in Aufsicht. Die Bereiche **27** bestehen aus wasser-undurchlässigem Material, zum gedrosselten Wasserdurchtritt dient ein Spalt **26**. Der Wasserstand **28** lässt im Normalfall einen Luftraum **25** frei, der einerseits der gleichzeitigen Luftzirkulation dient, andererseits als Notüberlauf. Die Drosselscheibe verhindert, dass bei einer hydraulischen Stoßbelastung (beispielsweise dem gleichzeitigen Entleeren mehrerer Badewannen) nicht ausreichend abgesetzter oder wieder aufgewirbelter Schlamm und/oder Dickstoffe unerwünscht durch den Ablauf **8** gespült werden.

**Fig. 11** zeigt eine Drosselscheibe Typ V in Aufsicht. Der Typ V ist gegenüber dem Typ T eine vorteilhafte Ausgestaltung, da sich der durchflossene Bereich **26** mit steigendem Wasserstand **28** automatisch vervielfacht, bis der Notüberlauf **25** genutzt wird.

**Fig. 12** zeigt das Schema einer Anordnung mit Schlamm-Vorbehandlung, hierbei ist **19** das MUTEC-System mit oder ohne Absetzbereich, in das kompostierbarer Schlamm und/oder Dickstoffe aus beliebigen Quellen zugeführt werden. Um im Gartenbau,Landschaftsbau und/oder in der Landwirtschaft verwertbaren Kompost zu erhalten, müssen Grenzwerte für Schwermetalle und andere nicht abbaubare Schadstoffe eingehalten werden. Es ist daher vorteilhaft, derartige Schadstoffe gar nicht erst in das System einzubringen. Dies wird erreicht durch das Vorschalten einer Schlammbehandlung **30** vor den Zulauf **1** zum MUTEC-System. Dabei hängt es von den einzelnen Dickstoff-Quellen sowie von der geplanten Verwertung des Kompostes ab, ob eine Schlammbehandlung der gesamten Fracht erfolgt, oder ob nur entsprechend belastete Teilströme mit einer Schlammbehandlung **30a** behandelt werden.

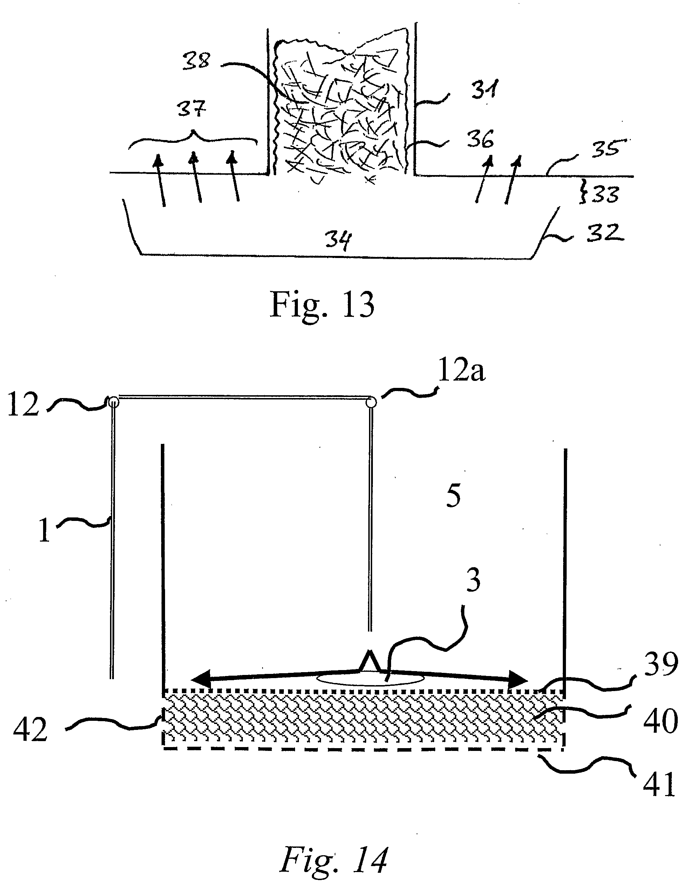

**Fig. 13** zeigt das Schema einer Kompostwanne **32** unter einer Kompostier-Einheit im Vertikalschnitt. Nachdem die Dickstoffe im Entwässerungs- und Kompostierbehälter **5** vorgetrocknet sind, ist es vorteilhaft, sie aus diesem Behälter zu entnehmen und vor Ort weiter zu kompostieren, beispielsweise in einem Hitzekomposter **31**. Um zu verhindern, dass mikrobiologische Verunreinigungen (Krankheitserreger) und/oder chemische Verunreinigungen aus dem Kompostgut **38** fäkalen Ursprungs in tiefere Bodenschichten und/oder ins Grundwasser unter dem Hitzekomposter **31** gelangen, ist unter dem Hitzekomposter **31** eine untere zumindest überwiegend wasserdichte Auffang-Vorrichtung, vorzugsweise eine Kompostwanne **32**, angeordnet. Dabei ist die Kompostwanne **32** derart unter dem Kompostgut **38** angeordnet, dass Bodenlebewesen aus der Umgebung durch einen Durchtrittsbereich **33** von beispielsweise 10 cm Höhe in den Auffangbereich für Sickerwasser **34** gelangen können, um Verunreinigungen und/oder Nährstoffe aus dem Sickerwasser abzubauen.
Die Kompostwanne **32** ist so angeordnet, dass sie den Hitzekomposter **31** unterirdisch deutlich überragt, d.h. dass oberhalb der Kompostwanne und im seitlichen Umkreis des Hitzekomposters ein Verdunstungsbereich **37** angeordnet ist, aus dem Wasserdampf und gasförmige Abbauprodukte aus dem Sickerwasser, beispielsweise Kohlendioxid, nach oben entweichen können **(Pfeile)**.
Sofern der Hitzekomposter **31** beispielsweise zur Anreicherung von Wärme beispielsweise mit einem Vlies **36** umhüllt und/oder ausgekleidet ist, bleibt dieses Vlies **36** an der Unterseite des Hitzekomposters **31** zumindest teilweise geöffnet. Vorteilhafterweise ist das Vlies **36** nur seitlich und/oder oberhalb des Hitzekomposters **31** angeordnet.
Das Fassungsvermögen der Kompostwanne **32** ist vorteilhafterweise ausreichend für die maximal zu erwartende Menge Sickerwasser, beispielsweise 50 Liter für einen Hitzekomposter der Größe 80 cm x 80 cm x 80 cm. Die Kompostwanne **32** enthält vorteilhafterweise Mutterboden.
Statt unter einem Hitzekomposter **31** ist die Erfindung auch in Verbindung mit jeder andern Form der Kompostierung und/oder der biologischen Umsetzung anwendbar.

**Fig. 14** zeigt den Entwässerungs- und Kompostierbehälter **5** im Vertikalschnitt mit weiteren Merkmalen. Die Zuführungsleitung für den Schlamm **1** führt die Dickstoffe gegen einen Prallteller **3**, von wo aus sie über den Behälterboden mit Sieblochung **41** abgelenkt werden **(Pfeile)**. Bei dieser Art der Zuführung reinigt das mit den Dickstoffen mitgeführte Wasser automatisch die Öffnungen im Behälterboden mit Sieblochung **41** und/oder die Sieb-Abdeckung **(9** über dem Filtermaterial **40**. Verglichen mit einem Behälterboden aus wasserdichtem Material hat ein Behälterboden mit Sieblochung **41** den Vorteil, dass die Entwässerungsleistung des Entwässerungs- und Kompostierbehälters **5** erhöht wird. Die Öffnungen sind dabei so gestaltet, dass sie klein genug sind, um Dickstoffe und/oder Filtermaterial, beispielsweise Holz-Hackschnitzel (40) zumindest überwiegend zurückzuhalten und groß genug, um Wasser zumindest überwiegend passieren zu lassen. Die Filterleistung wird durch eine Schicht aus Filtermaterial, beispielsweise Holz-Hackschnitzel **40** unterstützt, die auf dem Behälterboden mit Sieblochung **41** verteilt und durch eine Sieb-Abdeckung **39** gegen Verrutschen gesichert ist. Die Entwässerungsleistung kann weiter dadurch erhöht werden, dass zumindest im unteren Behälterbereich eine Behälterwand mit Sieblochung **42** angeordnet ist.
Eine lösbare Verbindung der Dickstoffleitung **12** und/oder **12a** erleichtert die Wartung.

### Ohne Fig.:

Eine weitere vorteilhafte Ausgestaltung ist die Durchführung einer Phosphatfällung im Absetzbereich. Um den Phosphatgehalt des Wassers bereits vor dem Ablauf in die weitere Wasserbehandlung zu reduzieren, kann dem Absetzbereich des Systems handelsübliches Fällmittel zugegeben werden. Die daraufhin absinkenden Phosphatkomplexe werden zusammen mit den restlichen anfallenden Schlamm- und/oder Dickstoffen im Entwässerungs- und Kompostierbehälter in den entstehenden Kompost integriert.

### Bezugszeichenliste

- 1: Zuführungsleitung für Schlamm
- 2: Duo-Verteilung
- 3: Prallteller
- 4: Belüftungsbohrung
- 5: Entwässerungs- und Kompostierbehälter
- 6: Absetzbereich
- 7: Zulauf zum MUTEC-System
- 8: Ablauf zur Wasser-Behandlung
- 8 a: Tauchwand
- 9: Bereich für weitere Wasser-Behandlung
- 10: Boden des Entwässerungs- und Kompostierbehälters
- 11: Rückfluss-Verhinderung, beispielsweise Rückschlagklappe
- 12, 12a: lösbare Verbindung der Dickstoffleitung
- 13: Biofilter zur Be- und Entlüftung
- 14: Pumpe für Rückwasser
- 15: Pumpe für Schlamm und/oder Dickstoffe
- 15a: Dickstoff-Leitung
- 16: Rückleitung für Sickerwasser
- 17: Auffangbereich für abgetropftes Schmutzwasser
- 18: Luft-Zirkulationsleitung
- 19: MUTEC-System
- 20: Schmutzwasserbehandlung Dritter, beispielsweise Festbettreaktor
- 21: Schmutzwasserbehandlung Dritter, beispielsweise SBR (sequencing batch) Reaktor, beispielsweise Aquamax
- 22: Tropfkörper
- 23: Filter zum Schwebstoffrückhalt
- 24: Drosselscheibe
- 25: Luftraum und Notüberlauf
- 26: gerader Spalt für gedrosselten Wasserdurchlauf
- 26a: v-förmiger Spalt für gedrosselten Wasserdurchlauf
- 27: wasser-undurchlässiges Material
- 28: beispielhafter Wasserstand
- 29: beliebige Schlamm- und/oder Dickstoff-Quelle
- 30: Einrichtung zur Vorbehandlung, beispielsweise zur Entfernung von Schwermetallen
- 31: Hitzekomposter
- 32: Kompostwanne
- 33: Durchschnittsbereich
- 34: Auffangbereich für Sickerwasser
- 35: Geländeoberkante
- 36: Vlies
- 37: Verdunstungsbereich
- 38: Kompostgut
- 39: Sieb-Abdeckung
- 40: Filtermaterial
- 41: Behälterboden mit Sieblochung
- 42: Behälterwand mit Sieblochung

## Patentansprüche

1. Verfahren zur Schlammführung aus einer Schmutzwasser-Behandlungsanlage in einen Entwässerungs- und Kompostierbehälter, wobei Schlamm und/oder Dickstoffe unterschiedlicher Quelle dem Bodenbereich eines Entwässerungs- und Kompostierbehälters zugeführt werden, so dass das Restwasser nach unten durchsickert während der obere Bereich der Feststoffe zunehmend durchtrocknet und kompostiert wird,
wobei der Schlamm und/oder die Dickstoffe zur direkten Entwässerung mittels einer Zuführungsleitung parallel zum Behälterboden und/oder über den Rand des Behälters direkt in den Bodenbereich mit einem auf dem Behälterboden angeordneten Filtermaterial des Entwässerungs- und Kompostierbehälters zugeführt werden ohne durch den Behälterboden hindurchgeführt zu werden und der Schlamm und/oder die Dickstoffe in Strömungsrichtung gegen einen Prallteller geführt werden, der sich zwischen der Zuführungsleitung und dem Filtermaterial auf dem Bodenbereich befindet.

2. Verfahren nach Anspruch 1,
**dadurch gekennzeichnet, dass**
Schlamm und/oder Dickstoffe aus mehr als einer Quelle gleichzeitig und/oder nacheinander dem selben Entwässerungs- und Kompostierbehälter zugeführt werden.

3. Verfahren nach Anspruch 1,
**dadurch gekennzeichnet, dass**
der zugeführte Schlamm und/oder die zugeführten Dickstoffe vorher eine Schlammbehandlung zur Entfernung unerwünschter Stoffe, vorzugsweise eine Sedimentation und/oder Elektroflotation zur Abtrennung von Schwermetallen, durchlaufen.

4. Verfahren nach einem der oberen Ansprüche,
**dadurch gekennzeichnet, dass**
ein Abfluss aus einem Absetzbereich, in dem der weiterzuführende Schlamm und/oder die Dickstoffe anfallen, durch eine Drosselscheibe reguliert wird.

5. Verfahren nach dem voranstehenden Anspruch,
**dadurch gekennzeichnet, dass**
dem Schmutzwasser im und/oder in Fliessrichtung vor dem Absetzbereich ein Phosphat-Fällmittel zugegeben wird, das Phosphate in den sich absetzenden Schlamm und somit in den Entwässerungs- und Kompostierbehälter überführt.

6. Verfahren nach einem der voranstehenden Ansprüche 1 bis 3,
**dadurch gekennzeichnet, dass**
der Schlamm und/oder die Dickstoffe zusammen mit dem Schmutzwasser, in dem sie suspendiert sind, dem Boden des Entwässerungs- und Kompostierbehälters zugeführt werden, ohne das Gemisch vorher durch einen getrennten Absetzbereich zu leiten.

7. Schmutzwasser-Behandlungsanlage mit einem Entwässerungs- und Kompostierbehälter (5),
wobei
zur direkten Entwässerung eine Zuführungsleitung (15a) parallel zum Boden (10) des Entwässerungs- und Kompostierbehälters (5) und/oder über den oberen Rand des Entwässerungs- und Kompostierbehälters (5) direkt in den Entwässerungs- und Kompostierbehälter (5) geführt ist, ohne den Behälterboden (10) zu durchtrennen, wobei Filtermaterial (40) auf dem Bodenbereich des Entwässerungs- und Kompostierbehälters (5) angeordnet ist und wobei mit der Zuführungsleitung (15a) Schlamm und/oder Dickstoffe direkt in den Bodenbereich des Entwässerungs- und Kompostierbehälters zugeführt werden und in Strömungsrichtung nach der Zuführungsleitung (1) zwischen dem Filtermaterial und der Zuführungsleitung mindestens ein Prallteller (3) angeordnet ist.

8. Schmutzwasserbehandlungsanlage nach Anspruch 7,
**dadurch gekennzeichnet, dass**
mehrere Zuführungsleitungen (15a) in den selben Entwässerungs- und Kompostierbehälter (5) münden können.

9. Schmutzwasserbehandlungsanlage nach Anspruch 7,
**dadurch gekennzeichnet, dass**
sie weiterhin einen Biofilter (13) umfasst, der als Be- und Entlüfter des Kompostier-Prozesses witterungsgeschützt, vorzugsweise unterirdisch auf oder neben dem Entwässerungs- und Kompostierbehälter (5) angeordnet ist.

10. Schmutzwasserbehandlungsanlage nach einem der Ansprüche 7 bis 9,
**dadurch gekennzeichnet, dass**
sie weiterhin einen Absetzbereich (6) in einem vorhandenen Schacht aufweist, der vorzugsweise in einer Dreikammergrube angeordnet ist.

11. Schmutzwasserbehandlungsanlage nach vorhergehendem Anspruch,
**dadurch gekennzeichnet, dass**
der Entwässerungs- und Kompostierbehälter (5) und der Absetzbereich (6) nebeneinander oder versetzt übereinander angeordnet sind.

12. Schmutzwasserbehandlungsanlage nach Anspruch 10 oder 11,
**dadurch gekennzeichnet, dass** sie weiterhin
eine Luft-Zirkulationsleitung (18) und/oder eine Zwangslüftung umfasst, welche zwischen dem Entwässerungs- und Kompostierbehälter und dem Absetzbereich angeordnet ist.

13. Schmutzwasserbehandlungsanlage nach einem der Ansprüche 7 bis 12,
**dadurch gekennzeichnet, dass**
vor einem Ablauf (8) des Restwassers ein Filter (23) angeordnet ist.

14. Schmutzwasserbehandlungsanlage nach dem voranstehenden Anspruch,
**dadurch gekennzeichnet, dass**
sie eine Drosselscheibe (24)umfasst, welche im Ablauf (8) des Restwassers angeordnet ist.

15. Schmutzwasserbehandlungsanlage nach dem voranstehenden Anspruch,
**dadurch gekennzeichnet, dass**
die Drosselscheibe (24) einen geraden Spalt (26) oder einen V-förmigen Spalt (26a) freilässt sowie zusätzlich maximal den halben Querschnitt als Notüberlauf (25).

16. Schmutzwasserbehandlungsanlage nach einem der Ansprüche 7 bis 15,
**dadurch gekennzeichnet, dass**
sie eine Vorrichtung zur Entfernung von unerwünschten Stoffen umfasst, welche in Fliessrichtung vor der Zuführung des Schlammes und/oder der Dickstoffe in den Entwässerungs- und Kompostierbehälter angeordnet ist.

17. Schmutzwasserbehandlungsanlage nach einem der Ansprüche 7 bis 9,
**dadurch gekennzeichnet, dass**
kein Absetzbereich zusätzlich zum Entwässerungs- und Kompostierbehälter (5) angeordnet ist und die Zuführungsleitung für das Gemisch aus Schmutzwasser und dem darin suspendierten Schlamm und/oder den Dickstoffen direkt in den Bodenbereich des Entwässerungs- und Kompostierbehälters mündet.

18. Schmutzwasserbehandlungsanlage nach Anspruch 7,
**dadurch gekennzeichnet, dass**
in mindestens einer Zuführungsleitung (15a) eine Be- oder Entlüftungsbohrung (4) oder ein Belüfter angeordnet ist.

19. Schmutzwasserbehandlungsanlage nach einem der voranstehenden Ansprüche 7 bis 18,
**dadurch gekennzeichnet, dass**
unterhalb eines Hitzekomposters (31), der die getrockneten Inhalte des Entwässerungs- und Kompostierbehälters (5) aufnimmt, eine zumindest überwiegend wasserundurchlässige Kompostwanne mit einem Durchtrittsbereich (33) für Bodenlebewesen und/oder einem Auffangbereich für Sickerwasser (34) und/oder einem Verdunstungsbereich (37) für gasförmige Abbauprodukte aus dem Sickerwasser angeordnet ist.

20. Schmutzwasserbehandlungsanlage nach einem der voranstehenden Ansprüche 7 bis 19
**dadurch gekennzeichnet, dass**
in/an der Zuführungsleitung für Schlamm mindestens eine lösbare Verbindung (12, 12a) angeordnet ist.

21. Schmutzwasserbehandlungsanlage nach Anspruch 7
**dadurch gekennzeichnet, dass**
im Boden (41) und/oder in der Behälterwand (42) des Entwässerungs- und Kompostierbehälters (5) mindestens eine Öffnung zum Durchtritt von Wasser und/oder zum Rückhalt von Filtermaterial (40) angeordnet ist.

22. Schmutzwasserbehandlungsanlage nach Anspruch 7
**dadurch gekennzeichnet,**
**dass** auf dem Filtermaterial (40) eine Abdeckung angeordnet ist.

## Claims

1. A method for guiding sludge from a waste water treatment installation to a dewatering and composting container, wherein sludge and/or thick matter from different sources are supplied to the base region of a dewatering and composting container so that the residual water seeps downwards whilst the upper region of the solid matter is progressively dried and composted,
wherein, for direct dewatering, the sludge and/or the thick matter are supplied by means of a supply line parallel to the container base and/or via the edge of the container directly into the base region of the dewatering and composting container, which base region has a filter material arranged on the container base, without being guided through the container base, and the sludge and/or the thick matter are guided in the flow direction towards an impact plate which is located between the supply line and the filter material on the base region.

2. The method according to Claim 1,
**characterized in that**
sludge and/or thick matter from more than one source are supplied simultaneously and/or in succession to the same dewatering and composting container.

3. The method according to Claim 1,
**characterized in that**
the supplied sludge and/or the supplied thick matter previously undergo sludge treatment for removing undesired matter, preferably sedimentation and/or electroflotation for separating heavy metals.

4. The method according to any one of the preceding claims,
**characterized in that**
a discharge flow from a settling region, in which the sludge to be guided further and/or the thick matter accumulate, is regulated by a baffle plate.

5. The method according to the preceding claim,
**characterized in that**
a phosphate precipitating agent is added to the waste water in and/or, as seen in the flow direction, upstream of the settling region, which phosphate precipitating agent transports phosphates into the settling sludge and therefore into the dewatering and composting container.

6. The method according to any one of the preceding Claims 1 to 3,
**characterized in that**
the sludge and/or the thick matter, together with the waste water in which they are suspended, are supplied to the base of the dewatering and composting container without previously conducting the mixture through a separate settling region.

7. A waste water treatment installation having a dewatering and composting container (5),
wherein,
for direct dewatering, a supply line (15a) is guided parallel to the base (10) of the dewatering and composting container (5) and/or via the upper edge of the dewatering and composting container (5) directly into the dewatering and composting container (5) without cutting through the container base (10), wherein filter material (40) is arranged on the base region of the dewatering and composting container (5) and wherein, by means of the supply line (15a), sludge and/or thick matter are supplied directly into the base region of the dewatering and composting container and at least one impact plate (3) is arranged downstream of the supply line (1), as seen in the flow direction, between the filter material and the supply line.

8. The waste water treatment installation according to Claim 7,
**characterized in that**
a plurality of supply lines (15a) can lead into the same dewatering and composting container (5).

9. The waste water treatment installation according to Claim 7,
**characterized in that**
it furthermore comprises a bio-filter (13) which, as an aeration and ventilation means for the composting process, is arranged weather-protected, preferably underground, on or near to the dewatering and composting container (5).

10. The waste water treatment installation according to any one of Claims 7 to 9,
**characterized in that**
it furthermore has a settling region (6) in an existing chute, which is preferably arranged in a three-chamber pit.

11. The waste water treatment installation according to the preceding claim,
**characterized in that**
the dewatering and composting container (5) and the settling region (6) are arranged next to one another or offset above one another.

12. The waste water treatment installation according to Claim 10 or 11,
**characterized in that** it furthermore
comprises an air circulating line (18) and/or a forced ventilation means, which is arranged between the dewatering and composting container and the settling region.

13. The waste water treatment installation according to one of Claims 7 to 12,
**characterized in that**
a filter (23) is arranged upstream of a drain (8) for the residual water.

14. The waste water treatment installation according to the preceding claim,
**characterized in that**
it comprises a baffle plate (24) which is arranged in the drain (8) for the residual water.

15. The waste water treatment installation according to the preceding claim,
**characterized in that**
the baffle plate (24) opens a linear gap (26) or a V-shaped gap (26a) and, in addition, a maximum of half the cross-section as an emergency overflow (25).

16. The waste water treatment installation according to any one of Claims 7 to 15,
**characterized in that**
it comprises a device for removing undesired matter, which, as seen in the flow direction, is arranged upstream of the supply of the sludge and/or the thick matter into the dewatering and composting container.

17. The waste water treatment installation according to any one of Claims 7 to 9,
**characterized in that**
a settling region is not arranged in addition to the dewatering and composting container (5) and the supply line for the mixture of waste water and the sludge and/or thick matter suspended therein leads directly into the base region of the dewatering and composting container.

18. The waste water treatment installation according to Claim 7,
**characterized in that**
an aeration or ventilation bore (4) or an aerator is arranged in at least one supply line (15a).

19. The waste water treatment installation according to any one of the preceding Claims 7 to 18,
**characterized in that**
an at least predominantly water-impermeable compost tub with a passage region (33) for soil organisms and/or a collecting region for seepage water (34) and/or an evaporation region (37) for gaseous decomposition products from the seepage water is arranged below a heat composter (31), which receives the dried contents of the dewatering and composting container (5).

20. The waste water treatment installation according to any one of the preceding Claims 7 to 19,
**characterized in that**
at least one detachable connection (12, 12a) is arranged in/on the supply line for sludge.

21. The waste water treatment installation according to Claim 7,
**characterized in that**
at least one opening for the passage of water and/or for retaining filter material (40) is arranged in the base (41) and/or in the container wall (42) of the dewatering and composting container (5).

22. The waste water treatment installation according to Claim 7,
**characterized in that**
a cover is arranged on the filter material (40).

## Revendications

1. Procédé d'acheminement des boues provenant d'une installation de traitement des eaux usées vers un réservoir de déshydratation et de compostage, des boues et/ou des matières épaisses de différentes origines étant conduites vers la zone de fond d'un réservoir de déshydratation et de compostage, si bien que l'eau résiduaire s'infiltre vers le bas pendant que la partie supérieure des matières solides est séchée à fond et compostée, les boues et/ou les matières épaisse s étant pour déshydratation directe acheminées au moyen d'une conduite d'amenée parallèle au fond du réservoir et/ou au-dessus du bord du réservoir, directement vers la zone de fond avec un matériau de filtre du réservoir de déshydratation et de compostage disposé sur le fond du réservoir, sans avoir à traverser le fond du réservoir, et les boues et/ou les matières épaisses sont acheminées dans la direction de flux vers une plaque de rebondissement située sur la zone de fond entre la conduite d'amenée et le matériau de filtre.

2. Procédé selon la revendication 1,
**caractérisé**
**en ce que** des boues et/ou des matières épaisses provenant de plus d'une source sont simultanément et/ou successivement acheminées vers le même réservoir de déshydratation et de compostage.

3. Procédé selon la revendication 1,
**caractérisé**
**en ce que** les boues acheminées et/ou les matières épaisses acheminées passent préalablement par un traitement de boues pour l'élimination de matières indésirables, préférentiellement par une sédimentation et/ou une électro-flottaison pour la séparation des métaux lourds.

4. Procédé selon l'une quelconque des revendications précédentes,
**caractérisé**
**en ce qu'**une évacuation d'une zone de dépôt où se déposent les boues et/ou les matières épaisses devant continuer à être acheminées est régulée par un papillon.

5. Procédé selon la revendication précédente,
**caractérisé**
**en ce qu'**un agent de précipitation des phosphates est ajouté aux eaux usées dans la zone de dépôt et/ou avant celle-ci dans la direction de flux, lequel transfère les phosphates vers les boues qui se déposent, donc vers le réservoir de déshydratation et de compostage.

6. Procédé selon l'une quelconque des revendications 1 à 3,
**caractérisé**
**en ce que** les boues et/ou les matières épaisses sont acheminées avec les eaux usées dans lesquelles elles sont suspendues, vers le fond du réservoir de déshydratation et de compostage, sans que le mélange soit auparavant conduit par une zone de dépôt séparée.

7. Installation de traitement des eaux usées avec un réservoir de déshydratation et de compostage (5),
où,
pour la déshydratation directe, une conduite d'amenée (15a) est conduite directement vers le réservoir de déshydratation et de compostage parallèlement au fond (10) du réservoir de déshydratation et de compostage (5) et/ou par le bord supérieur du réservoir de déshydratation et de compostage (5), sans traverser le fond du réservoir, un matériau de filtre étant disposé sur la zone de fond du réservoir de déshydratation et de compostage (5) et les boues et/ou matières épaisses étant directement acheminées par la conduite d'amenée (15a) vers la zone de fond du réservoir de déshydratation et de compostage, et au moins une plaque de rebondissement (3) étant disposée en aval de la conduite d'amenée (1) dans la direction de flux, entre le matériau de filtre et la conduite d'amenée.

8. Installation de traitement des eaux usées selon la revendication 7,
**caractérisée**
**en ce que** plusieurs conduites d'amenée (15a) peuvent déboucher dans le même réservoir de déshydratation et de compostage (5).

9. Installation de traitement des eaux usées selon la revendication 7,
**caractérisée**
**en ce que** celle-ci comprend en outre un filtre biologique (13), lequel est disposé de manière protégée contre les intempéries en tant qu'aérateur et purgeur du processus de compostage, préférentiellement sous terre, sur le réservoir de déshydratation et de compostage (5) ou à côté de celui-ci.

10. Installation de traitement des eaux usées selon l'une quelconque des revendications 7 à 9,
**caractérisée**
**en ce qu'**elle comprend en outre une zone de dépôt (6) dans un puits existant, préférentiellement ménagé dans une fosse à trois chambres.

11. Installation de traitement des eaux usées selon la revendication précédente,
**caractérisée**
**en ce que** le réservoir de déshydratation et de compostage (5) et la zone de dépôt (6) sont disposés côte à côte ou sont superposés avec décalage.

12. Installation de traitement des eaux usées selon la revendication 10 ou la revendication 11,
**caractérisée**
**en ce qu'**elle comprend en outre une conduite de circulation d'air (18) et/ou une ventilation forcée, montée entre le réservoir de déshydratation et de compostage et la zone de dépôt.

13. Installation de traitement des eaux usées selon l'une quelconque des revendications 7 à 12,
**caractérisée**
**en ce qu'**un filtre (23) est disposé avant une évacuation (8) de l'eau résiduaire.

14. Installation de traitement des eaux usées selon la revendication précédente,
**caractérisée**
**en ce qu'**elle comprend un disque d'étranglement (24), monté dans l'évacuation (8) de l'eau résiduaire.

15. Installation de traitement des eaux usées selon la revendication précédente,
**caractérisée**
**en ce que** le disque d'étranglement (24) dégage une fente droite (26) ou une fente en V (26a) et de manière complémentaire la moitié au maximum de la section transversale comme trop-plein de sécurité (25).

16. Installation de traitement des eaux usées selon l'une quelconque des revendications 7 à 15,
**caractérisée**
**en ce qu'**elle comprend un dispositif pour l'élimination de matières indésirables, disposé avant l'arrivée des boues et/ou des matières épaisses dans le réservoir de déshydratation et de compostage dans la direction de flux.

17. Installation de traitement des eaux usées selon l'une quelconque des revendications 7 à 9,
**caractérisée**
**en ce qu'**aucune zone de dépôt n'est présentée en complément du réservoir de déshydratation et de compostage (5), et **en ce que** la conduite d'amenée pour le mélange des eaux usées et des boues et/ou matières épaisses qui y sont suspendues débouche directement dans la zone de fond du réservoir de déshydratation et de compostage.

18. Installation de traitement des eaux usées selon la revendication 7,
**caractérisée**
**en ce que** un trou d'aération ou de purge (4) ou un aérateur est présenté dans au moins une conduite d'amenée (15a).

19. Installation de traitement des eaux usées selon l'une quelconque des revendications 7 à 18,
**caractérisée**
**en ce qu'**en dessous d'un thermocomposteur (31) recevant les contenus séchés du réservoir de déshydratation et de compostage (5), est disposée une cuve de compostage au moins majoritairement imperméable à l'eau avec une zone de passage (33) pour des espèces vivant dans le sol et/ou une zone de collecte pour les eaux d'infiltration (34) et/ou une zone d'évaporation (37) pour les produits de dégradation gazeux des eaux d'infiltration.

20. Installation de traitement des eaux usées selon l'une quelconque des revendications 7 à 19,
**caractérisée**
**en ce qu'**au moins un raccord amovible (12, 12a) est monté dans/sur la conduite d'amenée pour les boues.

21. Installation de traitement des eaux usées selon la revendication 7,
**caractérisée**
**en ce qu'**au moins une ouverture pour le passage de l'eau et/ou pour la retenue du matériau de filtre (40) est ménagée dans le fond (41) et/ou dans la paroi (42) du réservoir de déshydratation et de compostage (5).

22. Installation de traitement des eaux usées selon la revendication 7,
**caractérisée**
**en ce qu'**un couvercle est prévu sur le matériau de filtre (40).
